(19) Europäisches Patentamt / European Patent Office / Office européen des brevets

(11) **EP 3 411 624 B1**

(12) **FASCICULE DE BREVET EUROPEEN**

(45) Date de publication et mention
de la délivrance du brevet:
**27.04.2022 Bulletin 2022/17**

(21) Numéro de dépôt: **17707379.8**

(22) Date de dépôt: **03.02.2017**

(51) Classification Internationale des Brevets (IPC):
**F17C 5/02** *(2006.01)*

(52) Classification Coopérative des Brevets (CPC):
**F17C 5/02;** F17C 2201/054; F17C 2201/056;
F17C 2205/0326; F17C 2205/0332;
F17C 2205/0335; F17C 2205/0364;
F17C 2221/014; F17C 2221/017; F17C 2221/033;
F17C 2223/0161; F17C 2223/033;
F17C 2225/0161; F17C 2225/035; F17C 2227/015;
(Cont.)

(86) Numéro de dépôt international:
**PCT/FR2017/050257**

(87) Numéro de publication internationale:
**WO 2017/134407 (10.08.2017 Gazette 2017/32)**

(54) **INSTALLATION DE DÉLIVRANCE DE LIQUIDE CRYOGÉNIQUE**

AUSGABESYSTEM FÜR KRYOGENE FLÜSSIGKEIT

CRYOGENIC LIQUID DELIVERY SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **04.02.2016 FR 1650900**

(43) Date de publication de la demande:
**12.12.2018 Bulletin 2018/50**

(73) Titulaire: **Cryostar SAS
68220 Hesingue (FR)**

(72) Inventeur: **OURY, Simon
68300 Saint-Louis (FR)**

(74) Mandataire: **Meilinger, Claudia Sabine et al
Linde GmbH
Intellectual Property EMEA
Dr.-Carl-von-Linde-Straße 6-14
82049 Pullach (DE)**

(56) Documents cités:
EP-A2- 2 208 063    WO-A1-03/048692
DE-U1- 29 622 800    FR-A1- 2 975 772
FR-A1- 3 000 199

(52) Classification Coopérative des Brevets (CPC):
(Cont.)
F17C 2250/032; F17C 2250/0421; F17C 2250/043;
F17C 2250/0439; F17C 2250/0443;
F17C 2250/0452; F17C 2250/0456;
F17C 2250/0495; F17C 2260/024; F17C 2260/026;
F17C 2265/061; F17C 2270/0105;
F17C 2270/0168; F17C 2270/0171;
F17C 2270/0509; F17C 2270/0745; G01F 1/00;
G01F 1/86

**Description**

La présente invention concerne une installation de délivrance de liquide cryogénique.

L'invention peut concerner tout type de liquide cryogénique, c'est-à-dire tout liquide obtenu en refroidissant à de très basses températures (généralement inférieures à -100° C) des gaz (purs ou mélanges de gaz) comme par exemple de l'azote, de l'hélium ou du gaz naturel (méthane).

Pour certaines utilisations de liquides cryogéniques, le liquide est stocké dans une grande cuve et des moyens sont prévus pour délivrer des quantités de liquide dans des conteneurs, comme par exemple un réservoir d'un camion. On a ainsi une station de ravitaillement avec une cuve de stockage et des moyens de distribution sous pression adaptés au conteneur à remplir comportant généralement une pompe permettant de transférer du liquide cryogénique à partir de la cuve de stockage vers un réservoir d'un véhicule ou vers un bateau. On entend par la suite par conteneur, tout type de réservoir ou récipient ou similaire adapté à contenir du liquide, et plus particulièrement ici un liquide cryogénique. En outre, pour alléger la rédaction, on assimilera les transferts de liquide (de la cuve vers par exemple une bonbonne ou un dewar) à un ravitaillement (de la cuve vers un réservoir d'un véhicule, y compris un bateau).

Lorsqu'un véhicule se présente pour effectuer un ravitaillement à une station de délivrance de liquide cryogénique, comme par exemple du GNL (Gaz Naturel Liquéfié), son réservoir se trouve parfois sous pression du fait de l'évaporation du liquide cryogénique dans le réservoir. Ainsi, avant de réaliser le ravitaillement, il convient de réaliser un dégazage, c'est-à-dire retirer du gaz du réservoir pour abaisser la pression dans celui-ci. Ensuite, lors du ravitaillement, du liquide cryogénique est amené sous pression jusqu'au réservoir. Il peut arriver également que du gaz soit retiré du réservoir lors du transfert de liquide vers le réservoir. On a alors un flux de gaz à flux inverse du flux de liquide, par exemple séquentiellement en alternant des périodes de remplissage avec des périodes de dégazage. À l'issue d'un transfert de liquide il est aussi connu de permettre à du gaz de sortir du réservoir pour permettre de compléter le remplissage du réservoir.

Ainsi, lorsqu'il s'agit de déterminer la quantité de liquide cryogénique qui est délivrée, il convient également de tenir compte de la quantité de gaz qui sort du réservoir afin que cette quantité de gaz vienne en déduction de la quantité de liquide transféré. Il est ainsi connu de déterminer le flux massique de liquide entrant dans le réservoir et de lui soustraire le flux massique de gaz sortant de ce réservoir. En effet, une mesure de flux volumique serait inappropriée car la densité du fluide dépend fortement de sa température et de grosses variations de températures peuvent survenir lors d'un transfert de liquide vers un réservoir.

Toutefois, une information sur la masse de fluide transférée, même en tenant compte des flux "négatifs", c'est-à-dire sortant du réservoir, ne donne qu'une indication sur le transfert réalisé. Dans le cas du remplissage d'un réservoir de carburant, par exemple avec du GNL, la masse de gaz contenue dans le réservoir ne permettra pas, à elle seule, à déterminer l'autonomie potentielle pour le véhicule. La composition du GNL, mais aussi sa pression et sa température, auront une influence non négligeable sur cette autonomie.

Le document WO-92/02788 divulgue un appareil de mesurage de gaz liquéfié utilisé avec un équipement de distribution de gaz liquéfié qui conduit du gaz liquéfié d'une source d'approvisionnement à un point de distribution et des moyens de mesurage. L'appareil de mesurage est pourvu de moyens de détection servant à détecter un paramètre mesurable du gaz liquéfié relatif à la densité du gaz liquéfié, en particulier un paramètre électrique tel que la constante diélectrique, et à émettre un signal de détection indicatif du paramètre détecté. Des moyens de calcul sensibles au signal de détection servent à commander le fonctionnement des moyens de mesurage en compensant les modifications de la composition du gaz lors de l'évaluation du gaz liquéfié mesuré et distribué, au cours d'une opération de distribution, par les moyens de mesurage.

Le document US-2008/0223874 divulgue un système de remplissage automatique pour effectuer une opération de remplissage d'un véhicule de transport de liquide en vrac liquide. Au cours du remplissage, des tests qualitatifs sont effectués par un analyseur de gaz.

Le document DE-296 22 800 U1 divulgue une installation pour le transfert de gaz de pétrole liquéfié (LPG) d'un premier réservoir vers un second réservoir, avec un retour gazeux du second réservoir vers le premier. L'installation comprend en outre des moyens de détection et de mesure de la quantité transférée, de la température et de la pression entre les deux réservoirs.

L'invention a pour but de donner une indication sur l'énergie fournie au réservoir rempli lors d'un transfert de liquide cryogénique et de préférence aussi sur l'enthalpie fournie.

La présente invention a pour autre but de permettre une indication de la balance énergétique d'un transfert de liquide cryogénique afin de connaitre la quantité d'énergie qui est globalement délivrée au réservoir que l'on vient remplir.

À cet effet, la présente invention propose une installation de délivrance de liquide cryogénique comportant :

- des moyens de liaison pour le transfert d'un liquide cryogénique vers un réservoir, ainsi qu'une récupération de gaz sortant dudit réservoir ou similaire, et
- un premier débitmètre pour déterminer la masse de liquide sortant de l'installation de délivrance, et

Selon la présente invention, cette installation comporte en outre un dispositif de détermination du pouvoir calorifique du liquide transféré.

Des dispositifs de détermination du pouvoir calorifique d'un liquide (ou d'un gaz) comme par exemple du GNL sont connus. Grâce à de tels dispositifs, à partir de la connaissance du pouvoir calorifique du liquide et de sa masse, il est possible de déterminer l'énergie qui est fournie au réservoir que l'on remplit.

Les moyens de détermination du pouvoir calorifique du liquide transféré comportent par exemple un dispositif de mesure d'au moins une grandeur physique dans le domaine électrique et/ou thermique et/ou acoustique ainsi que des moyens de traitement associés audit dispositif de mesure pour fournir une valeur correspondant au pouvoir calorifique à partir de l'au moins une mesure réalisée. On mesure ainsi à titre d'exemple non limitatif, la résistivité, ou la capacitance, ou bien la vitesse de propagation d'une onde dans le fluide, ou bien sa conductivité thermique pour obtenir une caractérisation de ce fluide. Il est alors possible, à partir d'expériences qui ont été faites et dont les résultats sont utilisés dans des moyens de traitement électroniques, de connaitre le pouvoir calorifique du fluide analysé en fonction de la grandeur mesurée. Pour une plus grande précision, il est possible d'envisager de réaliser au moins deux mesures, de préférence dans deux domaines différents.

Pour tenir compte également du gaz qui s'en échappe lors d'étapes de dégazage réalisées le plus souvent pour la réalisation d'un bon remplissage du réservoir, une installation de délivrance comporteen outre

- un second débitmètre pour déterminer la masse de gaz récupéré, et
- un dispositif de détermination du pouvoir calorifique du gaz récupéré.

Ces moyens complémentaires permettent de déterminer l'énergie qui est retirée du réservoir que l'on est en train de remplir. Dans la plupart des cas, cette énergie est faible, voire négligeable, vis-à-vis de l'énergie transférée vers le réservoir. Toutefois, il y a aussi des cas où cette énergie est à prendre en compte pour une transaction précise et donc « juste » pour le client final.

De façon analogue à la détermination de capacité calorifique faite pour le liquide, on peut prévoir que les moyens de détermination du pouvoir calorifique du gaz récupéré comportent un dispositif de mesure d'au moins une grandeur physique dans le domaine électrique et/ou thermique et/ou acoustique ainsi que des moyens de traitement associés audit dispositif de mesure pour fournir une valeur correspondant au pouvoir calorifique à partir de l'au moins une mesure réalisée.

Dans une installation de délivrance telle que décrite ici, il est proposé qu'au moins un débitmètre pour déterminer une masse comporte un débitmètre mesurant un volume et un densimètre. Ainsi, la détermination de la masse de liquide ou de gaz s'effectue par une mesure de volume et une mesure de densité. La densité permettant de déduire une masse volumique, la masse peut ainsi être déduite également.

Une telle installation de délivrance comporte avantageusement un dispositif de comptabilisation donnant une indication de transfert d'énergie -en Joule ou équivalent-. Un dispositif d'affichage peut également être prévu pour donner une indication, de préférence en continu, lors d'une opération de remplissage.

Pour la détermination de l'enthalpie transférée, l'installation de délivrance comporte de préférence également des moyens de mesure de température et de pression, d'une part, du liquide sortant de l'installation de délivrance et, d'autre part, du gaz récupéré, et les moyens de traitement permettent de déterminer à partir de la composition du liquide transféré et du gaz récupéré ainsi qu'à partir des indications de température et de pression, un bilan enthalpique entre l'enthalpie du liquide transféré et celle du gaz récupéré.

Pour permettre un affichage de l'enthalpie transférée, un dispositif de comptabilisation donnant une indication de transfert d'enthalpie -en Joule ou équivalent- est avantageusement prévu.

Selon une forme de réalisation préférée, une installation de délivrance selon l'invention comporte :

- une première vanne disposée sur les moyens de liaison pour le transfert d'un liquide cryogénique vers le réservoir,
- le premier débitmètre étant disposé sur les moyens de liaison pour le transfert d'un liquide cryogénique vers le réservoir en aval de la première vanne,
- une deuxième vanne disposée sur les moyens de liaison pour le transfert d'un liquide cryogénique vers le réservoir en aval du premier débitmètre,
- les moyens de liaison pour le transfert d'un liquide cryogénique vers le réservoir comprenant une première conduite souple en aval de la deuxième vanne destinée à relier les moyens de liaison pour le transfert d'un liquide cryogénique vers le réservoirà un réservoir pour délivrer du liquide cryogénique à ce dernier,
- la récupération du gaz sortant dudit réservoir comprenant une ligne de dégazage raccordée à la ligne d'alimentation entre le premier débitmètre et la deuxième vanne,
- une troisième vanne disposée sur la ligne de dégazage,
- la récupération du gaz sortant dudit réservoir comprenant également une conduite souple dite conduite de dégazage, éventuellement confondue avec la première conduite souple, destinée à être reliée au réservoir pour permettre de retirer du gaz de ce dernier, ladite conduite de dégazage étant reliée aux moyens de liaison pour le transfert d'un liquide cryogénique vers le réservoir 34en aval de la deuxième vanne par l'intermédiaire d'une liaison, et

- un second débitmètre disposé sur la ligne de dégazage pour mesurer un débit de gaz.

Des détails et avantages de la présente invention apparaitront mieux de la description qui suit, faite en référence au dessin schématique annexé sur lequel :

L'unique figure illustre schématiquement une forme de réalisation préférée d'une installation de délivrance de liquide cryogénique.

Sur la droite de cette figure, on reconnait un réservoir 2 qui est relié à la station de délivrance de liquide cryogénique illustrée schématiquement. Le réservoir 2 peut être un réservoir d'un véhicule quelconque (camion mais aussi par exemple un bateau) ou un récipient indépendant (bouteille, dewar, ...). Le liquide cryogénique est par exemple du GNL (Gaz Naturel Liquéfié) mais il peut s'agir de tout autre type de liquide cryogénique (azote liquide, ...). À titre d'exemple illustratif et non limitatif, on supposera dans la suite de la description que le liquide délivré ici est du GNL pour alimenter un réservoir de camion.

La liaison entre le réservoir 2 et la station de délivrance est réalisée par un tuyau flexible qui comporte deux conduites : une première conduite, dite conduite d'alimentation 4, qui est destinée à amener le GNL en provenance de la cuve de stockage jusqu'au réservoir 2 du camion et une seconde conduite, dite conduite de dégazage 6 destinée à évacuer les éléments sous phase gazeuse présents dans le réservoir 2.

Selon une variante de réalisation non illustrée, une unique conduite flexible pourrait être utilisée. Dans cette variante, cette conduite assure alternativement la fonction de conduite de délivrance puis la fonction de conduite de dégazage.

La station de délivrance illustrée comporte en outre une ligne d'alimentation 8 en liquide cryogénique qui relie une cuve de stockage (non représentée) contenant la réserve de GNL à la conduite d'alimentation 4.

Une première vanne 10 est disposée sur la ligne d'alimentation 8 et permet de contrôler l'arrivée de liquide cryogénique dans le système de délivrance.

Un premier débitmètre 12 est disposé sur la ligne d'alimentation 8 en aval de la première vanne 10 pour mesurer la quantité de GNL alimentant le système de délivrance. En aval de ce débitmètre se trouve un clapet anti-retour 14 qui évite toute remontée de liquide cryogénique ainsi que de gaz vers la cuve de stockage.

Une deuxième vanne 16 est ensuite disposée sur la ligne d'alimentation 8 en aval du premier débitmètre 12.

Enfin, un autre clapet anti-retour 18 sur la ligne d'alimentation 8 avant sa jonction avec le tuyau flexible et plus précisément la conduite d'alimentation 4 de ce tuyau flexible est prévu pour éviter toute remontée de liquide mais aussi de gaz à ce niveau de la ligne d'alimentation 8.

Le système de délivrance représenté sur la figure comporte aussi une ligne de dégazage réalisée en plusieurs tronçons.

Un premier tronçon 20 de la ligne de dégazage raccorde la ligne d'alimentation 8 entre le clapet anti-retour 14 et la deuxième vanne 16 à un conduit non représenté permettant de réinjecter le gaz vers la cuve de stockage ou vers un autre système de récupération, voire éventuellement vers un dispositif de combustion. Une troisième vanne 22 contrôle le débit de gaz dans ce premier tronçon 20.

Un second tronçon 26 de la ligne de dégazage relie la ligne d'alimentation 8 au tuyau flexible, et plus particulièrement à la conduite de dégazage 6. Ce second tronçon 26 est raccordé à la ligne d'alimentation 8 en aval de la deuxième vanne 16. On retrouve sur ce second tronçon 26 un second débitmètre 28.

Un dispositif de mesure 24 permet de connaitre la pression et la température du gaz entre le premier tronçon 20 et le second tronçon 26.

Selon une variante de réalisation (non illustrée), on pourrait prévoir un unique débitmètre, remplaçant le premier débitmètre 12 et le second débitmètre 28, qui viendrait prendre place lui aussi entre le premier tronçon 20 et le second tronçon 26 aux côtés du dispositif de mesure 24 (optionnel). Ce débitmètre serait alors capable de fonctionner dans un premier sens et dans un sens inverse à ce premier sens et pourrait à la fois mesurer un débit liquide et un débit gazeux. À ce débitmètre, on pourrait également associer un densimètre pour mesurer un débit massique, de liquide ou de gaz, comme expliqué plus loin.

À l'intérieur du système de délivrance, une liaison 30 fait communiquer le second tronçon 26 à la ligne d'alimentation 8 à proximité de la conduite d'alimentation 4 et de la conduite de dégazage 6. La liaison 30 est raccordée au second tronçon 26 en amont du second débitmètre 28 et à la ligne d'alimentation 8 en aval du clapet anti-retour 18.

Un troisième clapet anti-retour 32 est prévu dans le second tronçon 26 entre le second débitmètre 28 et le raccordement du second tronçon 26 à la ligne d'alimentation 8. Il assure que le gaz circulant dans ce second tronçon 26 est évacué hors du réservoir 2.

Le fonctionnement de cette installation est succinctement décrit ici. Au départ, avant le raccordement du tuyau flexible sur le réservoir 2, la première vanne 10 est fermée pour éviter que du GNL ne s'écoule tandis que la deuxième vanne 16 et la troisième vanne 22 sont ouvertes (en continu ou par alternances) pour permettre un retour de gaz, provenant par exemple d'une évaporation de liquide présent dans les conduites, vers la cuve de stockage (ou tout autre système de récupération du gaz).

Lorsque le tuyau flexible, comportant la conduite d'alimentation 4 et la conduite de dégazage 6, est raccordé au réservoir 2, la troisième vanne 22 se ferme pour contrôler le débit de gaz sortant du réservoir 2. Si une opération de dégazage est prévue, alors cette troisième vanne 22 est ouverte pour permettre au gaz d'être retiré du réservoir 2. Le second débitmètre 28 mesure alors la quantité de gaz retirée hors du réservoir 2.

Préalablement à une première étape de remplissage une opération de refroidissement du système de délivrance peut être envisagée pour mettre le système à température de fonctionnement. Pour cette opération, du GNL est admis dans le système de délivrance en ouvrant la première vanne 10. Le GNL circule alors à travers le premier débitmètre 12 et retourne à la cuve de stockage par la troisième vanne 22. La deuxième vanne 16 reste fermée lors de cette opération de refroidissement et le système de contrôle et de gestion associé au système de délivrance ne prend pas en compte la quantité de GNL mesurée par le premier débitmètre 12.

Pour une étape de remplissage, la première vanne 10 et la deuxième vanne 16 sont ouvertes pour permettre au GNL de transiter par la ligne d'alimentation 8 de la cuve de stockage vers le réservoir 2. La troisième vanne 22 reste fermée de manière à empêcher un retour de gaz vers la cuve de stockage lors des étapes de remplissage.

À la fin d'une étape de remplissage, la première vanne 10 est fermée en premier, puis la deuxième vanne 16. Une temporisation est prévue pour que le liquide restant dans la ligne s'évapore. De la sorte, on s'assure que le tuyau flexible n'est manipulé que lorsqu'il contient du gaz, ce qui améliore la sécurité du système de délivrance. La temporisation est ici déterminée en fonction de paramètres liés à la station de délivrance à partir de calculs et/ou de tests expérimentaux.

Ensuite, lors d'une opération de dégazage du réservoir 2, la première vanne 10 est fermée pour que le système de délivrance ne soit plus alimenté en liquide cryogénique et la deuxième vanne 16 de même que la troisième vanne 22 sont ouvertes pour permettre la circulation du gaz vers la cuve de stockage (ou autre).

Les débitmètres 12 et 28 mesurent chacun des débits volumiques alors qu'il est convient ici de connaitre des débits massiques. Une simple mesure de débit volumique serait inappropriée ici car la densité des fluides des flux mesurés est fortement dépendante de la température et cette dernière varie sensiblement lors d'un transfert de liquide. Ainsi, comme illustré sur la figure un densimètre est associé à chaque débitmètre 12 et 28 volumique. Un premier densimètre 42 est associé ainsi au premier débitmètre 12 pour former tous deux un débitmètre massique. De même, un second densimètre 48 est associé au second débitmètre 28 pour former un densimètre massique.

Toutefois, en plus de la masse, il est utile pour le consommateur de connaitre l'énergie et/ou l'enthalpie contenue dans le liquide transféré au réservoir 2. C'est de cette énergie que dépendra l'autonomie de son véhicule.

Pour une même masse d'un même composant (méthane ou autre), il y a bien plus d'énergie et d'enthalpie en phase gazeuse qu'en phase liquide. Ainsi, lorsque du gaz retourne dans la cuve de stockage, il y a un transfert d'enthalpie plus important que lorsque la même masse de liquide est allée de la cuve vers le réservoir. Ce "surplus" d'enthalpie conduit à l'augmentation de la température et de la pression dans la cuve de stockage. Quand alors la pression dépasse un seuil donné, une soupape de sécurité s'ouvre et du gaz s'échappe hors de la cuve de stockage. Ceci provoque une perte de matière première (perte financière) et cette émission est dangereuse pour la santé et a un impact négatif sur l'environnement. Il convient donc de gérer au niveau de la cuve de stockage les flux entrants de gaz dans la cuve de stockage pour éviter par exemple que du gaz soit amené à quitter la cuve, en refroidissant par exemple cette dernière.

Dans certaines applications, en transférant du liquide vers le réservoir 2, le but est de réaliser un transfert de "froid". C'est le cas par exemple lors d'un transfert d'azote liquide utilisé pour maintenir en froid une remorque réfrigérée ou autre.

Dans le cas de GNL, le liquide cryogénique contient plusieurs composants (essentiellement du méthane mais aussi de l'éthane, du propane, du butane et d'autres composés). L'évaporation de tous ces composés ne se réalise pas de manière homogène car les composés avec une température d'ébullition plus élevée s'évaporeront moins vite que ceux avec une température d'ébullition moindre. De ce fait, la phase gazeuse du "GNL" n'a pas la même composition que le GNL (liquide). On trouve dans la phase gazeuse plus de méthane et d'azote en proportions que dans la phase liquide.

Dans le cas d'un mélange, l'énergie du mélange correspond à la somme des énergies de chacun des composés. De ce fait, la densité d'énergie dans la phase gazeuse est différente de la densité d'énergie dans la phase liquide du fait de leurs compositions chimiques différentes. Ainsi donc, la mesure de la masse transférée ne peut donc pas être utilisée pour connaitre l'énergie transférée.

De plus, la composition du GNL en phase liquide peut changer. De ce fait, la quantité d'énergie transférée n'est pas proportionnelle à la masse transférée.

Il est donc proposé ici de mesurer dans l'installation de délivrance décrite plus haut l'énergie et/ou l'enthalpie transférée(s) lors du remplissage du réservoir 2.

Comme déjà mentionné, lors d'une opération de remplissage, y compris les étapes de dégazages liées à ce remplissage, on mesure le flux massique de la phase liquide et gazeuse ainsi que la température et la pression de ces flux liquides et gazeux.

Pour la détermination du flux massique, la densité p de la phase liquide ainsi que de la phase gazeuse sont déjà mesurées. On souhaite aussi déterminer l'énergie massique "e" contenue dans la phase liquide et dans la phase gazeuse. Pour ce faire, un dispositif de mesure de pouvoir calorifique est associé à chaque fois à un débitmètre massique (comprenant dans le présent exemple un débitmètre volumique associé à un densimètre). On trouve ainsi en aval de la première vanne 10 le premier débitmètre 12 associé au premier densimètre 42 et à un premier dispositif de détermination de pouvoir calorifique 44 tandis que le second densimètre 48 et un second dispositif de détermination de pouvoir calorifique 50 sont associés au second débitmètre 28, en aval de la conduite de dégazage 6 souple, et de préférence en aval de la liaison 30.

Ces divers dispositifs de mesure sont utilisés tant pour les phases de remplissage lorsque du liquide est envoyé vers le réservoir 2 que lors de phases de dégazage au cours desquelles du gaz retourne vers la cuve de stockage (non représentée). Ces mesures peuvent être réalisées soit par échantillonnage (pression, température, densité, pouvoir calorifique) soit en continu. Les débitmètres fonctionnent bien entendu en continu.

Le pouvoir calorifique d'un fluide indique la quantité de chaleur (énergie) contenue dans une unité de ce fluide et dégagée lors de sa combustion complète. Les dispositifs de détermination du pouvoir calorifique sont des dispositifs connus. Il peut s'agir par exemple d'un dispositif intégrant un chromatographe qui réalise une analyse de la composition du gaz ou du liquide à partir d'un échantillon prélevé. Il est alors possible, à partir de cette composition, d'indiquer le pouvoir calorifique du mélange analysé grâce à des moyens de traitement, par exemple un dispositif électronique recevant entrée des valeurs mesurées et permettant à l'aide d'un logiciel interne de déterminer entre autres le pouvoir calorifique du mélange analysé dans le chromatographe.

Il existe également des dispositifs permettant de réaliser une analyse en continu de gaz ou de liquide. En réalisant des mesures électriques (résistivité, ...), des grandeurs calorifiques, parmi lesquelles le pouvoir calorifique, peuvent également être déterminées. On peut aussi déterminer ce pouvoir calorifique en réalisant une ou plusieurs mesures dans le domaine acoustique (par exemple détermination de la vitesse de propagation d'une onde sonore dans le fluide) et/ou dans le domaine thermique (par exemple détermination de la conductivité thermique). À partir d'une au moins de ces mesures, à l'aide de tables ou similaires, il est possible de déterminer le pouvoir calorifique d'un fluide (liquide ou gaz). Une table de conversion peut alors être enregistrée dans un dispositif électronique qui permet alors de fournir une valeur de pouvoir calorifique à partir d'une mesure réalisée dans le domaine électrique et/ou acoustique et/ou thermique sur le fluide concerné. Les moyens de traitement électroniques peuvent être intégrés à chaque dispositif d'analyse de la composition du gaz et du liquide ou bien être des moyens communs au dispositif d'analyse de la composition du gaz et au dispositif d'analyse de la composition du liquide.

Dans ce dernier cas de figure, c'est-à-dire lorsque le pouvoir calorifique est déterminé à partir d'une mesure d'une grandeur physique, il est préférable de faire deux mesures distinctes, dans le même domaine (électrique, acoustique ou thermique) ou bien dans un domaine différent.

À partir des mesures qui sont réalisées, on détermine la masse, l'enthalpie et l'énergie transférées.

Les calculs ci-après sont réalisés dans le cas où la détermination du pouvoir calorifique du liquide et du gaz est réalisée à partir de la détermination tout d'abord de la composition du liquide et du gaz. L'homme du métier en déduira sans problème les calculs pour une forme de réalisation dans laquelle le pouvoir calorifique du liquide et/ou du gaz est réalisé à partir d'une mesure d'une grandeur physique (au moins).

La masse totale M transférée est donnée par la formule :

$$M = \int \dot{m}\, dt$$

où $\dot{m}$ est le débit massique. Il convient de remarquer que ce débit massique sera positif pour le liquide allant vers le réservoir 2 et négatif pour le gaz retournant vers la cuve de stockage.

À l'aide en outre des mesures réalisées avec le dispositif de mesure 24 de pression et de température, il est également possible de déterminer l'enthalpie transférée qui correspond à l'enthalpie du liquide transféré vers le réservoir 2 diminuée de l'enthalpie du gaz retournant vers la cuve de stockage. Ainsi, l'enthalpie totale H transférée est donnée par la formule :

$$H = \int \dot{m}_l \cdot h_l(\rho_l)\, dt \;-\; \int \dot{m}_g \cdot h_g(\rho_g)\, dt + f(P,T)$$

les indices 1 correspondant au liquide et les indices g au gaz et f(P, T)correspondant à une fonction dépendant de la pression et de la température.

Dans le cas où le fluide cryogénique n'est pas un composé pur ou quasiment pur, comme c'est le cas notamment pour du GNL, alors tant pour le gaz que pour le liquide on a :

$$h = \sum_i x_i \cdot h_i(\rho)$$

l'indice i correspondant alors à tous les composés du mélange formant le fluide cryogénique transféré.

L'enthalpie du liquide et du gaz peut être calculée en continu ou bien par échantillonnage. Cette analyse est faite au niveau des dispositifs de détermination du pouvoir calorifique.

De même, on détermine l'énergie (calorifique) transférée par différence de l'énergie du liquide transféré diminuée de l'énergie du gaz retournant vers la cuve de stockage. L'énergie peut alors être calculée avec la formule :

$$E = \int \dot{m}_l \cdot e_l \, dt - \int \dot{m}_g \cdot e_g \, dt$$

Dans le cas du GNL ou bien d'un mélange de plusieurs composés, on a

$$e = \sum_i x_i \cdot e_i$$

l'indice i correspondant alors à tous les composés du mélange formant le fluide cryogénique transféré, l'analyse de la composition étant faite au niveau des dispositifs de détermination du pouvoir calorifique.

À titre d'exemple purement illustratif et non limitatif, on considère par exemple le remplissage d'un réservoir d'un camion.

Les hypothèses suivantes sont faites :

La masse volumique du GNL est de 420kg/m$^3$ (soit une densité de 0,420),
Le gaz s'évaporant de ce GNL présente une masse volumique de 18kg/m$^3$ (à une pression moyenne de 13 bar)
L'énergie interne "e" du liquide est par exemple de 15 kWh/kg
L'énergie interne "e" du gaz est par exemple de 11 kWh/kg
L'enthalpie du liquide Hi est de -354 kJ/kg
L'enthalpie du gaz $H_g$ est quant à elle de -740 kJ/kg
Ces données étant posées, on réalise tout d'abord une étape de dégazage du réservoir du camion au cours de laquelle la pression dans le réservoir passe de 15 bar à 10 bar en 2 min (=120 s) avec un débit de 1 kg/min.

Au cours de cette étape de dégazage, on a donc :

M= - 1 * 2= -2 kg

H = - 1*(-740) * 2 = 1480 kJ

E= - 1*(11) * 2 = -22 kWh

Après ce dégazage, on remplit le réservoir à 90% avec un débit massique 60 kg/min en 2 min (=120 s).

Au cours de ce remplissage, on a donc :

M= + 60 * 2 = 120 kg

H = + 60*(-354) * 2 = -42480 kJ

$$E= + 60*(15) * 2 = 1800 \text{ kWh}$$

Ensuite, à la fin de cette étape de remplissage, un dégazage est réalisé et fait passer la pression dans le réservoir de 15 bar à 10 bar en 0,5 min (=30s) avec un débit massique de 1 kg/min.
Au cours de cette étape de dégazage, on a donc :

$$M= - 0,5 * 1 = - 0,5 \text{ kg}$$

$$H = - 0,5 * (-740) * 1 = 370 \text{ kJ}$$

$$E= - 0,5 * (11) * 1 = -5,5 \text{ kWh}$$

Finalement, le remplissage du réservoir est effectué à 100%: le GNL est à la température de saturation correspondant à une pression de 8 bar. Le débit massique est de 60 kg/min pendant 0,5 min (=30 s)
Au cours de cette étape de finalisation du remplissage, on a donc :

$$M= + 60 * 0,5 = 30 \text{ kg}$$

$$H = + 60 * (-354) * 0,5 = -10620 \text{ kJ}$$

$$E= + 60*(11) * 0,5 = 330 \text{ kWh}$$

Au global on a donc :

M : masse totale transférée

$$M = -2 + 120 -0,5 + 30 = 147,5 \text{ kg}$$

H : enthalpie totale transférée :

$$H = 1480 - 42480 + 370 - 10\ 620 = -51250 \text{ kJ}$$

E : énergie (chimique) interne transférée

$$E = -22 + 1800 - 5,5 + 330 = 2102,5 \text{ kWh}$$

Ainsi, l'installation proposée prend en compte le gaz retournant à la cuve de stockage lors d'un dégazage. De la sorte, la mesure non seulement de la masse mais aussi de l'énergie et de l'enthalpie transférées lors de l'opération de remplissage du réservoir est réalisée avec plus de précision.
Le consommateur, qui utilise le camion ou autre dont le réservoir est rempli, connait non seulement la masse de carburant dans son réservoir mais aussi son énergie et son enthalpie, lui permettant ainsi d'avoir une meilleure connaissance de son autonomie.
Il est ici aussi possible de déterminer l'impact de l'enthalpie transférée à la cuve de stockage lors des étapes de dégazage.
Les mesures qui sont effectuées dans l'installation décrite ci-dessus peuvent être homologuées par les services des poids et mesures.
La présente invention ne se limite pas à la forme de réalisation préférée décrite et illustrée et aux variantes évoquées mais elle concerne également toutes les formes de réalisation à la portée de l'homme du métier dans le cadre des revendications ci-après.

Ainsi, on ne sortirait pas du cadre de l'invention par exemple en ne faisant qu'une mesure de l'énergie transférée, dans un seul sens ou dans les deux sens. L'invention ne s'applique pas uniquement à du GNL mais aussi à d'autres liquides cryogéniques.

**Revendications**

1. Installation de délivrance de liquide cryogénique comportant :

   - des moyens de liaison pour le transfert d'un liquide cryogénique vers un réservoir (2), ainsi qu'une récupération de gaz sortant dudit réservoir ou similaire,
   - un premier débitmètre (12, 42) pour déterminer la masse de liquide sortant de l'installation de délivrance,
   - un second débitmètre (28, 48) pour déterminer la masse de gaz récupéré,
   **caractérisée en ce qu'**elle comporte en outre un dispositif de détermination du pouvoir calorifique du liquide transféré et
   - un dispositif de détermination du pouvoir calorifique du gaz récupéré

2. Installation de délivrance selon la revendications 1, **caractérisée en ce que** les moyens de détermination du pouvoir calorifique du liquide transféré comportent un dispositif de mesure d'au moins une grandeur physique dans le domaine électrique et/ou thermique et/ou acoustique ainsi que des moyens de traitement associés audit dispositif de mesure pour fournir une valeur correspondant au pouvoir calorifique à partir de l'au moins une mesure réalisée.

3. Installation de délivrance selon la revendication 1 ou 2, **caractérisée en ce que** les moyens de détermination du pouvoir calorifique du gaz récupéré comportent un dispositif de mesure d'au moins une grandeur physique dans le domaine électrique et/ou thermique et/ou acoustique ainsi que des moyens de traitement associés audit dispositif de mesure pour fournir une valeur correspondant au pouvoir calorifique à partir de l'au moins une mesure réalisée.

4. Installation de délivrance selon l'une des revendications 1 à 3, **caractérisée en ce qu'**au moins un débitmètre pour déterminer une masse comporte un débitmètre mesurant un volume et un densimètre.

5. Installation de délivrance selon l'une des revendications 1 à 4, **caractérisée en ce qu'**elle comporte un dispositif de comptabilisation donnant une indication de transfert d'énergie -en Joule ou équivalent-.

6. Installation de délivrance selon la revendication 5, **caractérisée en ce qu'**elle comporte également des moyens de mesure de température et de pression (24), d'une part, du liquide sortant de l'installation de délivrance et, d'autre part, du gaz récupéré, et **en ce que** les moyens de traitement permettent de déterminer à partir de la composition du liquide transféré et du gaz récupéré ainsi qu'à partir des indications de température et de pression, un bilan enthalpique entre l'enthalpie du liquide transféré et celle du gaz récupéré.

7. Installation de délivrance selon la revendication 6, **caractérisée en ce qu'**elle comporte un dispositif de comptabilisation donnant une indication de transfert d'enthalpie -en Joule ou équivalent-.

8. Installation de délivrance selon l'une des revendications 1 à 7, **caractérisée en ce qu'**elle comporte :

   - une première vanne (10) disposée sur les moyens de liaison pour le transfert d'un liquide cryogénique vers le réservoir (2)(8), le premier débitmètre (12) étant disposé sur les moyens de liaison pour le transfert d'un liquide cryogénique vers le réservoir (2) en aval de la première vanne (10),
   - une deuxième vanne (16) disposée sur les moyens de liaison pour le transfert d'un liquide cryogénique vers le réservoir (2)en aval du premier débitmètre (12),
   - les moyens de liaison pour le transfert d'un liquide cryogénique vers le réservoir (2) comprenant une première conduite souple (4) en aval de la deuxième vanne (16) destinée à relier les moyens de liaison pour le transfert d'un liquide cryogénique vers le réservoir (2)à un réservoir (2) pour délivrer du liquide cryogénique à ce dernier,
   - la récupération du gaz sortant dudit réservoir comprenant une ligne de dégazage raccordée à la ligne d'alimentation (8) entre le premier débitmètre (12) et la deuxième vanne (16),
   - une troisième vanne (22) disposée sur la ligne de dégazage,
   - la récupération du gaz sortant dudit réservoir comprenant également une conduite souple dite conduite de dégazage (6), éventuellement confondue avec la première conduite souple, destinée à être reliée au réservoir pour permettre de retirer du gaz de ce dernier, ladite conduite de dégazage étant reliée aux moyens de liaison pour le transfert d'un liquide cryogénique vers le réservoir (2) en aval de la deuxième vanne (16) par l'intermédiaire d'une liaison, et
- le second débitmètre (28) étant disposé sur la ligne de dégazage pour mesurer un débit de gaz.

**Patentansprüche**

1.  Abgabesystem für kryogene Flüssigkeit, umfassend:

    - Verbindungsmittel zum Überführen einer kryogenen Flüssigkeit zu einem Tank (2) sowie zum Rückgewinnen von aus dem Tank austretendem Gas oder dergleichen,
    - einen ersten Durchflussmesser (12, 42) zum Bestimmen der Masse der aus dem Abgabesystem austretenden Flüssigkeit,
    - einen zweiten Durchflussmesser (28, 48) zum Bestimmen der Masse des rückgewonnenen Gases,
    **dadurch gekennzeichnet, dass** es außerdem eine Vorrichtung zum Bestimmen des Heizwerts der überführten Flüssigkeit umfasst, und
    - eine Vorrichtung zum Bestimmen des Heizwerts des rückgewonnenen Gases

2.  Abgabesystem nach Anspruch 1, **dadurch gekennzeichnet, dass** die Mittel zum Bestimmen des Heizwerts der überführten Flüssigkeit eine Vorrichtung zum Messen mindestens einer physikalischen Größe im elektrischen und/oder thermischen und/oder akustischen Bereich sowie Verarbeitungsmittel umfassen, die der Messvorrichtung zugeordnet sind, um einen dem Heizwert entsprechenden Wert auf Basis der mindestens einen durchgeführten Messung bereitzustellen.

3.  Abgabesystem nach Anspruch 1 oder 2, **dadurch gekennzeichnet, dass** die Mittel zum Bestimmen des Heizwerts des rückgewonnenen Gases eine Vorrichtung zum Messen mindestens einer physikalischen Größe im elektrischen und/oder thermischen und/oder akustischen Bereich sowie Verarbeitungsmittel umfassen, die der Messvorrichtung zugeordnet sind, um einen dem Heizwert entsprechenden Wert auf Basis der mindestens einen durchgeführten Messung bereitzustellen.

4.  Abgabesystem nach einem der Ansprüche 1 bis 3, **dadurch gekennzeichnet, dass** mindestens ein Durchflussmesser zum Bestimmen einer Masse einen Durchflussmesser, der ein Volumen misst, und einen Dichtemesser umfasst.

5.  Abgabesystem nach einem der Ansprüche 1 bis 4, **dadurch gekennzeichnet, dass** es eine Abrechnungsvorrichtung umfasst, die eine Angabe der Energieübertragung - in Joule oder Äquivalentem - liefert.

6.  Abgabesystem nach Anspruch 5, **dadurch gekennzeichnet, dass** es auch Mittel zum Messen von Temperatur und Druck (24) der aus dem Abgabesystem austretenden Flüssigkeit einerseits und des rückgewonnenen Gases andererseits umfasst und dass die Verarbeitungsmittel es ermöglichen, anhand der Zusammensetzung der überführten Flüssigkeit und des rückgewonnenen Gases sowie anhand der Temperatur- und Druckangaben eine Enthalpiebilanz zwischen der Enthalpie der überführten Flüssigkeit und der des rückgewonnenen Gases zu bestimmen.

7.  Abgabesystem nach Anspruch 6, **dadurch gekennzeichnet, dass** es eine Abrechnungsvorrichtung umfasst, die eine Angabe der Enthalpieübertragung - in Joule oder Äquivalentem - liefert.

8.  Abgabesystem nach einem der Ansprüche 1 bis 7, **dadurch gekennzeichnet, dass** es umfasst:

    - ein erstes Ventil (10), das an den Verbindungsmitteln zum Überführen einer kryogenen Flüssigkeit zum Tank (2)(8) angeordnet ist, wobei der erste Durchflussmesser (12) an den Verbindungsmitteln zum Überführen einer kryogenen Flüssigkeit zum Tank (2) stromabwärts des ersten Ventils (10) angeordnet ist,
    - ein zweites Ventil (16), das an den Verbindungsmitteln zum Überführen einer kryogenen Flüssigkeit zum Tank (2) stromabwärts des ersten Durchflussmessers (12) angeordnet ist,
    - wobei die Verbindungsmittel zum Überführen einer kryogenen Flüssigkeit zum Tank (2) eine erste flexible Leitung (4) stromabwärts des zweiten Ventils (16) umfassen, die dazu bestimmt ist, die Verbindungsmittel zum Überführen einer kryogenen Flüssigkeit zum Tank (2) mit einem Tank (2) zu verbinden, um kryogene Flüssigkeit an diesen abzugeben,
    - wobei die Rückgewinnung des aus dem Tank austretenden Gases eine Entgasungsleitung umfasst, die mit der Versorgungsleitung (8) zwischen dem ersten Durchflussmesser (12) und dem zweiten Ventil (16) verbunden ist,
- ein drittes Ventil (22), das an der Entgasungsleitung angeordnet ist,
- wobei die Rückgewinnung des aus dem Tank austretenden Gases auch eine flexible Leitung, die so genannte Entgasungsleitung (6), umfasst, die gegebenenfalls mit der ersten flexiblen Leitung zusammenfällt und dazu bestimmt ist, mit dem Tank verbunden zu werden, um das Abziehen von Gas aus dem Tank zu ermöglichen, wobei die Entgasungsleitung mit den Verbindungsmitteln zum Überführen einer kryogenen Flüssigkeit zum Tank (2) stromabwärts des zweiten Ventils (16) über eine Verbindung verbunden ist, und
- wobei der zweite Durchflussmesser (28) an der Entgasungsleitung angeordnet ist, um einen Gasdurchfluss zu messen.

**Claims**

1. A cryogenic liquid delivery installation comprising:

   - connecting means for transferring a cryogenic liquid to a tank (2), as well as a recovery of gas exiting said tank or the like,
   - a first flowmeter (12, 42) for determining the mass of liquid exiting the delivery installation,
   - a second flowmeter (28, 48) for determining the mass of recovered gas,
   **characterized in that** it further comprises a device for determining the calorific value of the transferred liquid and
   - a device for determining the calorific value of the recovered gas

2. The delivery installation according to claim 1, **characterized in that** the means for determining the calorific value of the transferred liquid comprise a device for measuring at least one physical quantity in the electrical and/or thermal and/or acoustic field as well as processing means associated with said measuring device in order to provide a value matching the calorific value from the at least one measurement carried out.

3. The delivery installation according to claim 1 or 2, **characterized in that** the means for determining the calorific value of the recovered gas comprise a device for measuring at least one physical quantity in the electrical and/or thermal and/or acoustic field as well as processing means associated with said measuring device in order to provide a value matching the calorific value from the at least one measurement carried out.

4. The delivery installation according to one of claims 1 to 3, **characterized in that** at least one flowmeter for determining a mass comprises a flowmeter measuring a volume and a density meter.

5. The delivery installation according to one of claims 1 to 4, **characterized in that** it comprises an accounting device that gives an indication of energy transfer -in Joule or equivalent-.

6. The delivery installation according to claim 5, **characterized in that** it also comprises means for measuring temperature and pressure (24), on the one hand, of the liquid exiting the delivery installation and, on the other hand, of the recovered gas, and **in that** the processing means make it possible to determine, from the composition of the transferred liquid and of the recovered gas as well as from the temperature and pressure indications, an enthalpy balance between the enthalpy of the transferred liquid and that of the recovered gas.

7. The delivery installation according to claim 6, **characterized in that** it comprises an accounting device that gives an indication of enthalpy transfer -in Joule or equivalent-.

8. The delivery installation according to one of claims 1 to 7, **characterized in that** it comprises:

   - a first valve (10) arranged on the connecting means for transferring a cryogenic liquid to the tank (2)(8), the first flowmeter (12) being arranged on the connecting means for transferring a cryogenic liquid to the tank (2) downstream of the first valve (10),
   - a second valve (16) arranged on the connecting means for transferring a cryogenic liquid to the tank (2) downstream of the first flowmeter (12),
   - the connecting means for transferring a cryogenic liquid to the tank (2) comprising a first flexible pipe (4) downstream of the second valve (16) intended for attaching the connecting means for transferring a cryogenic liquid to the tank (2) to a tank (2) in order to deliver the cryogenic liquid thereto,

- the recovery of gas exiting said tank comprising a degassing line attached to the supply line (8) between the first flowmeter (12) and the second valve (16),
- a third valve (22) arranged on the degassing line,
- the recovery of the gas exiting said tank also comprising a flexible pipe referred to as degassing pipe (6), optionally merged with the first flexible pipe, intended to be attached to the tank in order to allow gas to be withdrawn from the latter, said degassing pipe being attached to the connecting means for transferring a cryogenic liquid to the tank (2) downstream of the second valve (16) via a connection, and
- the second flowmeter (28) being arranged on the degassing line in order to measure a gas flow rate.

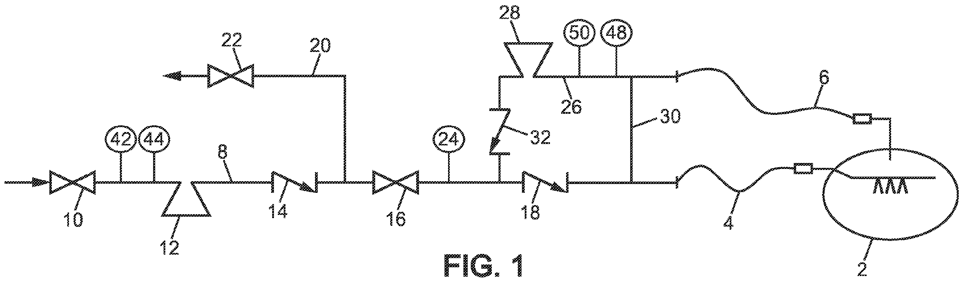

**FIG. 1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9202788 A
- US 20080223874 A

- DE 29622800 U1